# EUROPÄISCHE PATENTSCHRIFT

(11) **EP 0 411 368 B1**
(45) Veröffentlichungstag und Bekanntmachung des Hinweises auf die Patenterteilung: **23.03.1994**
(21) Anmeldenummer: 90113506.1
(22) Anmeldetag: 14.07.1990
(51) Int. Cl.: F16K 11/074

(54) **Drehschieber**
Rotary disk valve
Tiroir rotatif

(30) Priorität: 31.07.1989 DE 3925270
(43) Veröffentlichungstag der Anmeldung: 06.02.1991
(73) Patentinhaber: WILO GmbH, D-44263 Dortmund (DE)
(72) Erfinder: Genster, Albert, D-4376 Marl (DE)
(74) Vertreter: Cohausz & Florack Patentanwälte

(56) Entgegenhaltungen:
- EP-A- 0 176 828
- DE-A- 3 545 681
- DE-B- 1 915 438
- US-A- 2 062 994
- US-A- 4 216 798

## Beschreibung

Die Erfindung betrifft einen Drehschieber mit einem kreisscheibenförmigen, im Schiebergehäuse gelagerten Ventilstellglied, das um die Schieberachse drehverstellbar ist und Öffnungen und/oder Ausnehmungen aufweist, über die Zufluß- und Abflußöffnungen des Schiebergehäuses wahlweise miteinander verbunden werden können, wobei im Schiebergehäuse ein Kanal koaxial zur Schieberachse angeordnet ist, der das Stellglied durchdringt und in einer ersten äußeren ebenen Seitenfläche des Gehäuses mündet, die rechtwinklig zum Kanal liegt.

Drehschieber sind bekannt und werden vielfältig eingesetzt. In der Praxis werden für die Verbindung sowohl zwischen Drehschieber und Pumpe als auch zum Anschluß an andere Teile, insbesondere an einen Filter, zusätzliche Leitungen montiert. Dies ist arbeits- und platzaufwendig.

Aus der US-A-4 216 798 ist ein Drehschieber der eingangs genannten Art an einem Filterbehälter bekannt. Dieser bekannte Drehschieber hat große Außenabmessungen und ist an unterschiedlichen Vorrichtungen nicht einsetzbar.

Aufgabe der Erfindung ist es, einen Drehschieber der eingangs genannten Art so zu verbessern, daß bei einfacher Konstruktion und Herstellung ein geringer Montageaufwand erforderlich ist und insbesondere im montierten Zustand die Außenabmessungen gering sind.

Diese Aufgabe wird erfindungsgemäß dadurch gelöst, daß an dem Schiebergehäuse, auf dessen der ersten äußeren ebenen Seitenfläche gegenüberliegenden Seite, eine zu der ersten Seitenfläche parallel gerichtete zweite äußere Seitenfläche ausgebildet ist, die zwei der Zufluß- oder Abflußöffnungen aufweist und an der eine Vorrichtung befestigbar ist.

Ein solcher Drehschieber läßt sich ohne zusätzlich zu montierende Zwischenleitungen direkt zwischen zwei Seitenwänden an Vorrichtungen wie Pumpe und/oder Filter montieren, deren Strömungen vom Drehschieber zu steuern sind. Damit wird nicht nur die Montage wesentlich einfacher, sondern es wird auch eine besonders platzsparende Bauweise erreicht, da der Drehschieber als Sandwichbauteil zwischen diese Vorrichtungen montiert werden kann. Hierdurch wird auch die Sicherheit gegen Undichtigkeiten erhöht, da statt zweier Verbindungsstellen an den beiden Enden jeder Leitung nur noch eine Verbindungsstelle pro Leitung vorhanden ist.

Der im Schiebergehäuse angeordnete koaxiale Kanal kann direkt mit dem Einlaß einer Pumpe verbunden werden, der in einer Seitenfläche einer Pumpe koaxial angeordnet ist, so daß die Seitenflächen von Pumpe und Drehschieber direkt aneinander liegen. Die gegenüberliegende freie parallele Seitenfläche dieses Drehschiebers dient zum Befestigen einer zweiten Vorrichtung einschließlich Anschlüsse. Damit sind in beiden einander gegenüberliegenden parallelen Seitenflächen des Drehschiebers mindestens je zwei Anschlüsse vorgesehen, die mit entsprechenden Anschlüssen der angeschlossenen Vorrichtungen fluchten. Die zwei Seitenflächen des Drehschiebers dienen somit den Anschlüssen und Abdichtungen. Hierbei kann der koaxiale Kanal in der zweiten Seitenfläche münden.

Besonders vorteilhaft ist es, wenn an den äußeren ebenen Seitenflächen des Gehäuses Vorrichtungen, insbesondere eine Pumpe oder ein Filtergehäuse, mit ihrer ebenso äußeren Seitenfläche befestigbar sind, wobei diese Seitenfläche jeweils eine Durchflußöffnung aufweist, die mit der Mündungsöffnung des Kanals in der äußeren Seitenfläche des Drehschiebers fluchtet. Von großem Vorteil ist es auch, wenn das Ende des koaxialen Kanals, das der äußeren ebenen Seitenfläche abgewandt ist, in insbesondere axialer Richtung verschlossen ist und mit einem radialen, zweiten Kanal verbunden ist, der zu einem Anschlußstutzen führt.

Besonders vorteilhaft ist es, wenn das Ventilstellglied am äußeren Rand einen Zahnkranz trägt, in das ein Ritzel oder Kegelrad zur Verstellung eingreift, das über eine Welle mit einem Antrieb, insbesondere einem Handrad verbunden ist. Hierbei kann der Zahnkranzantrieb ein Übersetzungsverhältnis von 6:1 aufweisen. Durch diese Übersetzung wird erreicht, daß bei jeder Umdrehung des Drehgriffs oder des Stellmotors das Ventilstellglied sich um 60 Grad weiterdreht, so daß die Verbindungskanäle und Verbindungskammer im Drehschieber im 60-Grad-Abstand angeordnet sein können, und damit eine Fehlbedienung mit hoher Sicherheit verhindert wird.

Ein Ausführungsbeispiel der Erfindung ist in den Zeichnungen dargestellt und wird im folgenden näher beschrieben. Es zeigen :

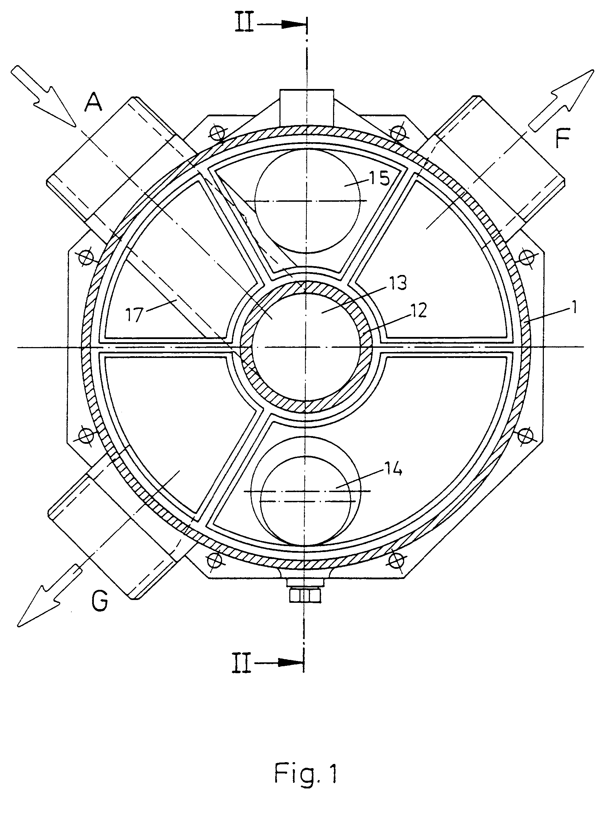

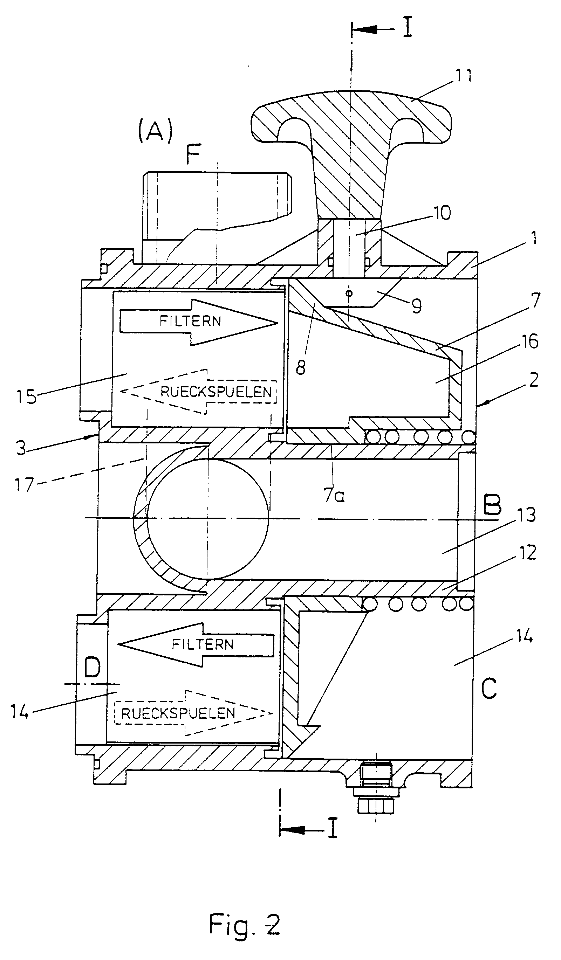

- Fig. 1: einen Querschnitt durch den Drehschieber nach I-I in Figur 2,
- Fig. 2: einen axialen Schnitt durch den Drehschieber nach II-II in Figur 1 und

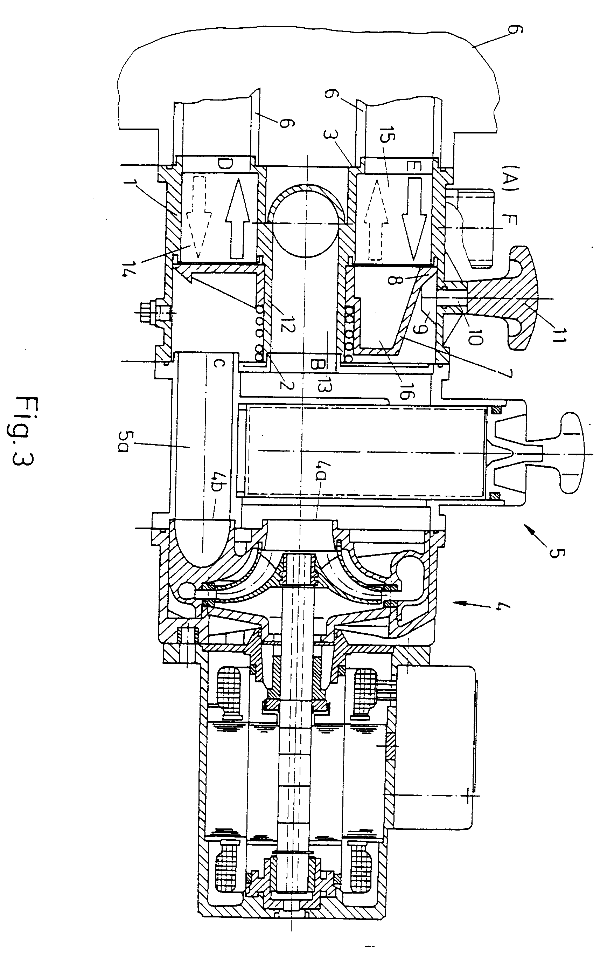

- Fig. 3: einen axialen Längsschnitt durch den Drehschieber mit angeschlossenem Filterkessel, Grobfilter und Pumpe.

Der Drehschieber ist ein 5-Wege-Ventil und für die verschiedensten Zwecke vielfältig einsetzbar. Im folgenden wird er im Einsatz bei einem Schwimmbecken beschrieben, dessen Wasser zum Filtern umgepumpt wird. Hierbei treten folgende Arbeitsweisen auf:
1. Filtern des Wassers
2. Rückspülen, d.h. Reinigen des Filters
3. Klarspülen, d.h. Reinigen des Ventils und der Leitungen
4. Bypass, d.h. Umpumpen des Schwimmbeckenwassers ohne Filtern
5. Entleeren, d.h. Abpumpen des Schwimmbeckenwassers zur Kanalisation
6. Geschlossen, d.h. alle Leitungen sind geschlossen.

Der Drehschieber weist sieben Anschlüsse A bis G auf, von denen die Anschlüsse A, F und G am Umfang des zylindrischen Drehschiebergehäuses radial angeordnet sind und die Anschlüsse B, C auf der der Pumpe zugewandten und die Anschlüsse D und E auf der der Pumpe abgewandten Seitenfläche des Drehschiebers liegen. Hierbei sind die Zylinderstirnflächen rechtwinklig zur Zylinderachse, wobei die Fläche 2 zum Anflanschen direkt an der Seitenfläche einer Pumpe 4 oder einem dazwischen geschalteten scheibenförmigen Grobfilter 5 dient. An der Fläche 3 ist die Seitenfläche eines Filterkessels 6 befestigt.

Die in den Flächen 2, 3 angeordneten Ein- und Auslässe B bis E fluchten mit den Aus- und Einlässen der angeschlossenen Vorrichtungen 4 bzw. 5 und 6.

Im zylindrischen Gehäuse 1 liegt koaxial ein insbesondere scheibenförmiger Drehschieber als Ventilstellglied 7 ein, das mit Kammern und Leitungen bzw. Öffnungen die im Gehäuse befindlichen Kanäle in unterschiedlicher Weise miteinander verbindet, abhängig von der jeweiligen Drehstellung des Stellgliedes 7.

Das Stellglied weist an seinem Außenumfang einen Zahnkranz 8 auf, in den ein Kegelrad 9 eingreift, dessen Achse radial angeordnet ist und das über eine Welle 10 mit einem Drehknopf 11 oder einem Stellmotor verbunden ist, der außen am Gehäuse 1 vorsteht und von Hand bedienbar ist. Das Übersetzungsverhältnis zwischen Kranz 8 und Kegelrad 9 beträgt zu 6:1, so daß bei einer vollen Umdrehung des Handrades 11 das Stellglied 7 sich um 60 Grad verdreht und damit von einer Verbindungsstellung in eine andere Verbindungsstellung wechselt.

Das Stellglied 7 weist eine mittige koaxiale zylindrische Öffnung 7a auf, mit der es auf einem zylindrischen hohlen Stutzen 12 gelagert ist, der im Gehäuse 1 angeordnet, insbesondere am Gehäuse angeformt ist. Die Öffnung 7a bzw. der Stutzen 12 bilden damit einen koaxialen Kanal 13, der mittig in der Fläche 2 mündet und dort die Anschlußöffnung B bildet. Am gegenüberliegenden Ende ist der Kanal 13 über eine radiale Leitung 17 mit dem Anschluß A verbunden. Alternativ kann aber auch der Kanal 13 weiter bis zur Fläche 3 durchgeführt sein, so daß er dann in der Fläche 3 eine weitere Anschlußöffnung bildet.

Im Ausführungsbeispiel ist der Anschluß A über die radiale Leitung und den Kanal 13 mit dem Anschluß B ständig verbunden, ohne durch das Stellglied 7 verschließbar zu sein. Ferner befindet sich in der Fläche 2 noch eine seitlich versetzte Anschlußöffnung C, die über einen achsparallelen Kanal 14 je nach Stellung des Stellgliedes 7 mit der Anschlußöffnung D in der Fläche 3 verbunden ist. Diametral gegenüberliegend weist die Fläche 3 noch die Anschlußöffnung E auf, die über einen achsparallelen Kanal zum Stellglied 7 führt und von diesem über eine Kammer 16 mit dem Anschluß F verbindbar ist. Die weiteren Verbindungswege, die durch das Stellglied 7 zwischen den einzelnen Anschlüssen A bis G geschaffen werden, sind der folgenden Funktionsbeschreibung entnehmbar:

Der Drehschieber ist mit seinem scheibenförmigen Gehäuse 1 zwischen dem Filterkessel 6 und dem Grobfilter 5 befestigt, wobei auf der anderen Seite des scheibenförmigen Filters 5 die Pumpe 4 befestigt ist. Hierbei kann der Filter 5 entfallen, so daß das Gehäuse 1 auch direkt an der Pumpe 4 befestigt sein kann. Hierbei sind die Anschlüsse wie folgt verbunden:

Anschluß A mit dem Auslaß des Schwimmbeckens, Anschluß B mit dem Einlaß 4a der Pumpe 4 unter möglicherweise der Zwischenschaltung des Grobfilters 5, Anschluß C mit dem Auslaß 4b der Pumpe 4 unter möglicherweise einer Zwischenschaltung einer Verbindungsleitung 5a im Gehäuse des Grobfilters 5, Anschluß D mit dem Einlaß des Filterkessels 6, Anschluß E mit dem Auslaß des Filterkessels 6, Anschluß F mit dem Einlaß des Schwimmbeckens und Anschluß G mit dem Einlaß zur Kanalisation.

In der in den Figuren dargestellten ersten Drehstellung "Filtern" sind die Anschlüsse in der Weise durch das Stellglied 7 miteinander verbunden, daß das Wasser des Schwimmbeckens abgesaugt, gefiltert und danach wieder in das Schwimmbecken zurückgepumpt wird. Hierbei saugt die Pumpe 4 über den Anschluß A das Wasser an, das über den radialen Kanal zum Kanal 13 fließt und über den Anschluß B und den Grobfilter 5 zum Einlaß 4a der Pumpe. Von dort gelangt das Wasser über den Auslaß 4b der Pumpe und den Kanal 5a zum Anschluß C und über den Kanal 14 zum Anschluß D. Es fließt dann durch den Filterkessel 6 zum Anschluß E und über Kanal 15 und Kammer 16 zum Anschluß F und von dort zurück ins Schwimmbecken.

In der zweiten Drehstellung "Rückspülen" des Stellglieds 7 fließt das Wasser vom Anschluß A über Filter 5 und Pumpe 4 zum Anschluß C und von dort über das Stellglied 7 zum Anschluß E, so daß der Filterkessel 6 in umgekehrter Richtung durchflossen wird. Vom Anschluß D fließt dann das Wasser zusammen mit den Schmutzteilchen des Kessels 6 zum Anschluß G und damit zum Abwasser bzw. zur Kanalisation.

In der dritten Drehstellung "Klarspülen" bzw. Reinigen des Ventils und der Leitungen als auch der Pumpe fließt das Wasser vom Anschluß A zum Anschluß B und von dort über Filter 5 und Pumpe 4 zum Anschluß C und von diesem über Anschluß D, Filterkessel 6, Anschluß E, Kammer 16 und Anschluß G zum Abwasser.

Vierte Drehstellung "Bypass":

Soll das Wasser des Schwimmbeckens nur umgepumpt werden, ohne durch den Filterkessel 6 zu strömen, so fließt es in der weiteren Drehstellung des Stellglieds 7 vom Anschluß A über den Anschluß B den Filter 5, die Pumpe 4, den Anschluß C und das Stellglied 7 zum Anschluß F.

In der fünften Drehstellung "Entleeren" fließt das Wasser vom Anschluß A zum Anschluß B und über Filter 5, Pumpe 4 und Anschluß C über das Stellglied 7 zum Anschluß G und damit zum Kanal.

In der sechsten Drehstellung "Geschlossen" des Ventilstellglieds 7 wird eine Schaltstellung erreicht, die Durchströmungen in oben beschriebener Weise nicht ermöglicht. Es wird damit auch eine mögliche Rückströmung aus dem Abwasserkanal verhindert.

## Patentansprüche

1. Drehschieber mit einem kreisscheibenförmigen, im Schiebergehäuse (1) gelagerten Ventilstellglied (7), das um die Schieberachse drehverstellbar ist und Öffnungen und/oder Ausnehmungen aufweist, über die Zufluß- und Abflußöffnungen (A-G) des Schiebergehäuses (1) wahlweise miteinander verbunden werden können, wobei im Schiebergehäuse (1) ein Kanal (13) koaxial zur Schieberachse angeordnet ist, der das Stellglied (7) durchdringt und in einer ersten äußeren ebenen Seitenfläche (2) des Gehäuses (1) mündet (Mündungsöffnung 3) die rechtwinklig zum Kanal (13) liegt, **dadurch gekennzeichnet**, daß an dem Schiebergehäuse (1), auf dessen der ersten äußeren ebenen Seitenfläche (2) gegenüberliegenden Seite, eine zu der ersten Seitenfläche parallel gerichtete zweite äußere Seitenfläche (3) ausgebildet ist, die zwei der Zufluß- oder Abflußöffnungen (D, E) aufweist und an der eine Vorrichtung befestigbar ist.

2. Drehschieber nach Anspruch 1, **dadurch gekennzeichnet**, daß die Zufluß- und Abflußöffnungen (A-G) als Kammern (16) ausgebildet sind, die jeweils mit Anschlußleitungen (14, 15) verbunden sind.

3. Drehschieber nach Anspruch 1 oder 2, **dadurch gekennzeichnet**, daß der Kanal (13) auch in der zweiten äuberen Seitenfläche (3) mündet;

4. Drehschieber nach einem der Ansprüche 1 bis 3, **dadurch gekennzeichnet**, daß an den beiden äußeren ebenen Seitenflächen (2, 3) des Gehäuses (1) Vorrichtungen, insbesondere eine Pumpe (14) oder ein Filtergehäuse (5), mit ihrer ebenso äußeren Seitenfläche befestigbar sind, wobei diese Seitenfläche jeweils eine Durchflußöffnung aufweist, die mit der Mündungsöffnung (B) des Kanals (13) in der äußeren Seitenfläche (2) des Drehschiebers fluchtet.

5. Drehschieber nach einem der vorherigen Ansprüche, **dadurch gekennzeichnet**, daß das der Mündungsöffnung (B) gegenüberliegende Ende des Kanals (13) in insbesondere axialer Richtung verschlossen ist und mit einem radialen, zweiten Kanal (17) verbunden ist, der zu einem Anschlußstutzen (A) führt.

6. Drehschieber nach einem der vorherigen Ansprüche, **dadurch gekennzeichnet**, daß das Ventilstellglied (7) am äußeren Rand einen Zahnkranz (8) trägt, in den ein Ritzel oder Kegelrad (9) zur Verstellung eingreift, das über eine Welle (10) mit einem Antrieb verbunden ist.

7. Drehschieber nach Anspruch 6, **dadurch gekennzeichnet**, daß der Zahnkranzantrieb (8,9) ein Übersetzungsverhältnis von 6:1 aufweist.

## Claims

1. A rotary disc valve having a circular-disc-shaped valve adjustment member (7) which is mounted in the disc valve casing (1) and can be rotatably adjusted around the disc valve axis and is formed with apertures and/or recesses via which supply and discharge apertures (A-G) of the disc valve casing (1) can be optionally connected to one another, while disposed in the disc valve casing (1) coaxially with its axis is a channel (13) which extends through the adjusting member (7) and discharges in a first outer flat lateral face (2) of the casing (1) (discharge aperture B) which lies at right angles to the channel (13), characterized in that on its side opposite the first outer flat lateral face (2) the disc valve casing (1) is formed with a second outer lateral face (3) which is directed parallel with the first lateral face and which has two of the supply or discharge apertures (D, E) and to which a device can be attached.

2. A rotary disc valve according to claim 1, characterized in that the supply and discharge apertures (A-G) are constructed in the form of chambers (16), each of which is connected to connecting lines (14, 15).

3. A rotary disc valve according to claims 1 or 2, characterized in that the channel (13) also discharges in the second outer lateral face (3).

4. A rotary disc valve according to one of claims 1 to 3, characterized in that devices, more particularly a pump (14) or a filter casing (5) can be attached via their outer lateral face to the outer flat lateral faces (2, 3) of the casing (1), the side face of each of said devices having a flow aperture which is aligned with the discharge aperture (B) of the channel (13) in the outer lateral face (2) of the rotary disc valve.

5. A rotary disc valve according to one of the preceding claims, characterized in that the end of the channel (13) opposite the discharge aperture (B) is closed in more particularly the axial direction and connected to a radial second channel (17) which extends to a connecting spigot (A).

6. A rotary disc valve according to one of the preceding claims, characterized in that the outer edge of the valve adjusting member (7) bears a toothed rim (8) in which a pinion or bevel wheel engages which is connected via a spindle (10) to a drive (9).

7. A rotary disc valve according to claim 6, characterized in that the toothed rim drive (8, 9) has a transmission ratio of 6:1.

## Revendications

1. Tiroir rotatif avec un organe de réglage (7) de vanne en forme de disque circulaire monté dans le carter (1) du tiroir, qui est réglable en rotation autour de l'axe du tiroir et présente des ouvertures et/ou des évidements par lesquels des ouvertures d'entrée et de sortie (A-G) du carter (1) du tiroir peuvent être reliées les unes aux autres au choix, un canal (13) étant disposé dans le carter (1) du tiroir coaxialement à l'axe du tiroir, traversant l'organe de réglage (7) et débouchant (ouverture d'embouchure B) dans une première face latérale plane extérieure (2) du carter (1) qui se trouve orthogonale au canal (13),
caractérisé en ce qu'une seconde face extérieure (3), dirigée parallèlement à la première face extérieure est formée sur le carter du tiroir, sur sa face opposée à la première face latérale plane extérieure (2), qui présente deux des ouvertures d'entrée ou de sortie (D-E) et sur laquelle peut être fixé un dispositif.

2. Tiroir rotatif selon la revendication 1,
caractérisé en ce que les ouvertures d'entrée et de sortie (A-G) sont réalisées sous forme de chambres (16) qui sont reliées respectivement à des conduites de raccordement (14, 15).

3. Tiroir rotatif selon la revendication 1 ou 2,
caractérisé en ce que le canal (13) débouche aussi dans la seconde face latérale extérieure (3).

4. Tiroir rotatif selon l'une des revendications 1 à 3,
caractérisé en ce que des dispositifs, en particulier une pompe (14) ou un carter de filtre (5), peuvent être fixés par leur face latérale également extérieure aux deux faces latérales planes extérieures (2, 3) du carter (1), cette face extérieure présentant respectivement une ouverture de passage qui est alignée avec l'ouverture d'embouchure (B) du canal (13) dans la face latérale (2) du tiroir rotatif.

5. Tiroir rotatif selon l'une des revendications précédentes,
caractérisé en ce que l'extrémité du canal (13) opposée à l'ouverture d'embouchure (B) est fermée en particulier en direction axiale et est reliée à un second canal radial (17) qui conduit à un tuyau de raccordement (A).

6. Tiroir rotatif selon l'une des revendications précédentes,
caractérisé en ce que l'organe de réglage (7) de vanne porte sur le bord extérieur une couronne dentée (8) dans laquelle vient en prise un pignon ou une roue conique (9) de déplacement, qui est relié à un entraînement par l'intermédiaire d'un arbre (10).

7. Tiroir rotatif selon la revendication 6,
caractérisé en ce que l'entraînement à couronne dentée (8, 9) présente un rapport de réduction de 6:1.
